# EUROPEAN PATENT APPLICATION

(11) **EP 4 593 243 A1**
(43) Date of publication of application: **30.07.2025**
(21) Application number: 23872751.5
(22) Date of filing: 28.07.2023
(51) Int. Cl.: H02J 9/00, H02J 13/00, H02J 50/00, H02M 7/04, H04W 88/08

(54) **POWER CONTROL CIRCUIT AND ELECTRONIC DEVICE WHICH REDUCE STANDBY POWER, AND METHOD THEREFOR**

(30) Priority: 27.09.2022 KR 20220122672
(71) Applicant: Samsung Electronics Co., Ltd., Suwon-si, Gyeonggi-do 16677 (KR)
(72) Inventor: JEONG, Seogyong, Suwon-si, Gyeonggi-do 16677 (KR); KIM, Daehyun, Suwon-si, Gyeonggi-do 16677 (KR); RYU, Youngho, Suwon-si, Gyeonggi-do 16677 (KR); LEE, Kyungmin, Suwon-si, Gyeonggi-do 16677 (KR); LEE, Sangwook, Suwon-si, Gyeonggi-do 16677 (KR)
(74) Representative: Arnold & Siedsma
(86) International application number: PCT/KR2023/011024
(87) International publication number: WO 2024/071627

(57) **Abstract**

According to embodiments, a power control circuit may comprise: a switch; a controller; a communication module; a signal detector configured to output a wake-up signal on the basis of a first signal provided from the outside; and a second power circuit configured to transfer power to the controller and the communication module on the basis of the wake-up signal. The controller may be configured to control the switch such that power is transferred from a power source to a first power circuit of an electronic device, on the basis of a second signal obtained through the communication module.

## Description

### [TECHNICAL FIELD]

Embodiments of the disclosure relate to a power control circuit and electronic device for reducing standby power, and a method thereof.

### [BACKGROUND ART]

An electronic device (e.g., home appliance) may operate in an operating state in which it receives power and performs a specified function (e.g., display function, refrigeration function, washing function, communication function, control function, output function, and so on) and a standby state in which it does not perform a specific function, while consuming a specific amount of standby power. The electronic device may be in an off state in which it does not consume power.

In the case of an electronic device (e.g., a remote control, a mobile device, or the like) controlled by an external device, it continues to perform a previously performed function until it receives a control signal from the external device or operates in the standby state in which it waits for reception of a control signal.

Each component of the electronic device consumes a significant amount of standby power in the standby state, which results in unnecessary waste of power. In addition, much effort is required to comply with regulations regarding the standby power of electronic devices.

### [DETAILED DESCRIPTION OF THE INVENTION]

### [TECHNICAL SOLUTION]

According to embodiment, a power control circuit may include a switch, a communication module, a controller, a signal detector configured to output a wake-up signal based on a first signal provided from outside, and a second power circuit configured to transmit power to the controller and the communication module, based on the wake-up signal output from the signal detector. The controller may be configured to control the switch to transmit power from the power source to a first power circuit of an electronic device, based on a second signal obtained through the communication module.

According to embodiment, an electronic device may include a first power circuit, a switch, a communication module, a controller, a signal detector configured to output a wake-up signal based on a first signal provided from outside, and a second power circuit configured to transmit power to the controller and the communication module, based on the wake-up signal output from the signal detector. The controller may be configured to control the switch to transmit power from the power source to the first power circuit, based on a second signal obtained through the communication module.

According to embodiment, a method of operating an electronic device may include identifying a first signal from outside through a signal detector of the electronic device. The method may include providing a wake-up signal from the signal detector to a second power circuit of the electronic device. The method may include, upon receipt of the wake-up signal by the second power circuit, providing power from the second power circuit to a controller of the electronic device and a communication module of the electronic device. The method may include receiving a second signal provided from the outside through the communication module. The method may include, upon receipt of the second signal, controlling a switch of the electronic device to transmit power from the power source to a first power circuit of the electronic device through the switch.

According to embodiment, in a computer-readable recording medium storing instructions configured to enable a controller of an electronic device to perform at least one operation, the at least one operation may include identifying a first signal from outside through a signal detector of the electronic device. The at least one operation may include providing a wake-up signal from the signal detector to a second power circuit of the electronic device. The at least one operation may include, upon receipt of the wake-up signal by the second power circuit, providing power from the second power circuit to the controller of the electronic device and a communication module of the electronic device. The at least one operation may include receiving a second signal provided from the outside through the communication module. The at least one operation may include, upon receipt of the second signal, controlling a switch of the electronic device to transmit power from the power source to a first power circuit of the electronic device through the switch.

### [BRIEF DESCRIPTION OF DRAWINGS]

FIG. 1 is a block diagram illustrating devices included in a system according to an embodiment.
FIG. 2 is a block diagram illustrating a power control circuit, an electronic device, and a power source according to an embodiment.
FIG. 3 is a block diagram illustrating a communication module according to an embodiment.
FIG. 4 is a diagram illustrating a communication module, a signal detector, and a harvester according to an embodiment.
FIG. 5 is a diagram illustrating a communication module, a signal detector, and a harvester according to an embodiment.
FIG. 6 is a diagram illustrating a communication module, a signal detector, and a harvester according to an embodiment.
FIG. 7 is a diagram illustrating a communication module, a signal detector, and a harvester according to an embodiment.
FIG. 8 is a flowchart illustrating a method of operating a power control circuit according to an embodiment.
FIG. 9 is a flowchart illustrating a method of operating a power control circuit according to an embodiment.
FIG. 10 is a flowchart illustrating a method of operating a power control circuit according to an embodiment.
FIG. 11 is a flowchart illustrating a method of operating a power control circuit according to an embodiment.
FIG. 12 is a flowchart illustrating a method of operating a power control circuit according to an embodiment.

### [Mode for Carrying out the Invention]

A preferred embodiment of the disclosure will be described below in more detail with reference to the attached drawings. It should be noted that the same components in the drawings are indicated by the same symbols wherever possible. Lest it should obscure the subject matter of the disclosure in the following description and the accompanying drawings, a detailed description of well-known functions and configurations will be avoided.

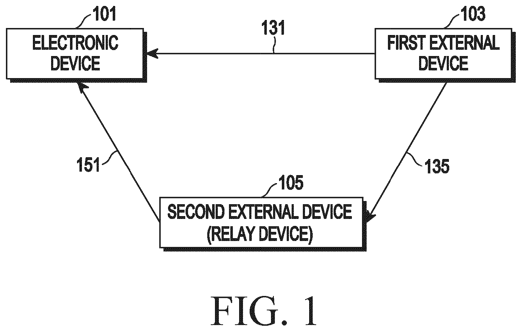

FIG. 1 is a block diagram illustrating devices included in a system according to an embodiment.

Referring to FIG. 1, the system may include an electronic device 101, a first external device 103, and/or a second external device 105.

According to an embodiment, the electronic device 101 may receive a signal 131 directly from the first external device 103. The signal 131 transmitted from the first external device 103 may be a signal 131 transmitted from the first external device 103 to the electronic device 101, when a user operates the first external device 103. The first external device 103 may transmit the signal 131 to the electronic device 101, regardless of the user's operation. Upon receipt of the signal 131, the electronic device 101 may perform a function corresponding to the signal 131. The type of the signal 131 transmitted from the first external device 103 to the electronic device 101 is not limited. The type of the function that the electronic device 101 performs upon receipt of the signal 131 is not limited. For example, the electronic device 101 that receives the signal 131 related to an on/off function may switch at least one component of the electronic device 101 to an active state or an inactive state. The active state may be an on state (e.g., an operating state). The on state may be a state in which power is supplied. The operating state may be a state in which a specific function is performed. The active state may be a state which is the on state but not the operating state. The active state may be a state which is the operating state in the on state. The electronic device 101 (e.g., at least one component included in the electronic device 101) which has switched from the inactive state to the active state may perform a specific function of the electronic device 101. The inactive state may include an off state or a standby state. The electronic device 101 which has switched from the active state to the inactive state may stop performing a specific function of the electronic device 101. The off state may be a state in which the electronic device 101 or at least one component included in the electronic device 101 does not receive power. The standby state may be a state in which the electronic device 101 or at least one component included in the electronic device 101 consumes standby power. The standby power may be power consumed when the electronic device 101 or at least one component included in the electronic device 101 is not performing a specific function, but is in the standby state for performing the specific function.

According to an embodiment, the electronic device 101 may receive a signal 151 from the second external device 105. The second external device 105 may transmit the signal 151 to the electronic device 101 as part of performing an independent function, independently of the first external device 103. The second external device 105 may transmit the signal 151 to the electronic device 101 under the control of the first external device 103. Upon receipt of a first signal 135 from the first external device 103, the second external device 105 may transmit a second signal 151 to the electronic device 101. The second external device 105 may transmit the signal 151 to the electronic device 101 in relation to the first external device 103. The second external device 105 may be a relay device 105. Upon receipt of the signal 151, the electronic device 101 may perform a function corresponding to the signal 151. The type of the signal 151 transmitted from the first external device 103 to the electronic device 101 is not limited. The type of the function that the electronic device 101 performs upon receipt of the signal 151 is not limited. For example, the electronic device 101 that receives the signal 151 related to an on/off function may switch at least one component of the electronic device 101 to the active state or the inactive state.

For example, the first external device 103 may be a remote control or a mobile device. For example, the second external device 105 may be a wireless access point, a beacon, or a smart remote control hub. For example, the electronic device 101 may be a TV, a washing machine, a dryer, a laptop, a refrigerator, a speaker, a clothing care device, an air conditioner, an air purifier, a robot vacuum cleaner, a dishwasher, an electric rice cooker, a microwave oven, a mixer, or a multi-outlet. Those skilled in the art will understand that the types of the electronic device 101, the first external device 103, and the second external device 105 are not limited.

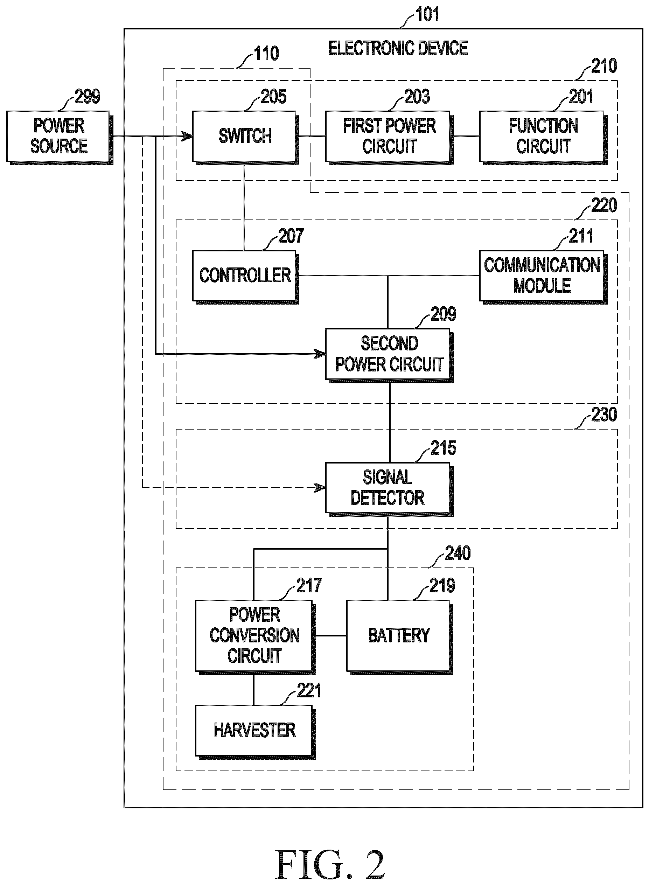

FIG. 2 is a block diagram illustrating a power control circuit, an electronic device, and a power source according to an embodiment.

Referring to FIG. 2, the electronic device 101 may receive power from a power source 299. The power source 299 may be a wall power source (e.g., grid power), and the type of the power source 299 is not limited. The electronic device 101 may perform a specific function based on the power provided from the power source 299.

Referring to FIG. 2, the electronic device 101 may include at least one of a function circuit 201, a first power circuit 203, a switch 205, a controller 207, a communication module 211, a second power circuit 209, a signal detector 215, a power conversion circuit 217, a battery 219, or a harvester 221. The electronic device 101 may not include some of the components disclosed in FIG. 2. An operation of the electronic device 101 may be understood as an operation of each component included in the electronic device 101.

Referring to FIG. 2, a power control circuit 110 may receive power from the power source 299. The power control circuit 110 may perform a specific function based on the power provided from the power source 299. The power control circuit 110 may include at least one of the switch 205, the controller 207, the communication module 211, the second power circuit 209, the signal detector 215, the power conversion circuit 217, the battery 219, or the harvester 221. The power control circuit 110 may control the switch 205 to provide power to the first power circuit 203 of the electronic device 101.

As illustrated in FIG. 2, the electronic device 101 may include the power control circuit 110. According to an embodiment, the electronic device 101 may not include the power control circuit 110. The power control circuit 110 may be implemented as a separate device from the electronic device 101. For example, a device (e.g., a power control device) including the power control circuit 110 may control the electronic device 101 (e.g., a device including the function circuit 201 and the first power circuit 203). For example, the device (e.g., the power control device) including the power control circuit 110 may control the electronic device 101 (e.g., the device including the function circuit 201 and the first power circuit 203) based on a signal from the first external device 103 or the second external device 105 (e.g., a relay device). Hereinafter, the description of the electronic device 101 including the power control circuit 110 may be similarly applied to the power control circuit 110 implemented as a separate device from the electronic device 101.

For convenience of description, the following definitions are made. A group including the function circuit 201, the first power circuit 203, and the switch 205 may be referred to as a main group 210. A group including the controller 207, the communication module 211, and the second power circuit 209 may be referred to as a sub-group 220. A group including the signal detector may be referred to as a standby power saving group 230. A group including the power conversion circuit 217, the battery 219, and the harvester 221 may be referred to as a harvesting group 240.

The electronic device 101 may perform a specific function using the main group 210. The specific function is a unique function of the electronic device 101, and the type of the specific function is not limited. For example, the specific function may be a screen display function, a refrigeration function, a washing function, a communication function, a control function, or an output function.

The electronic device 101 may control power provided to the main group 210 using the sub-group 220. Upon receiving power, the main group 210 may be switched from the inactive state (e.g., the off state) to the active state. The main group 210 may perform a specific function in the active state. The electronic device 101 may provide a control signal from the sub-group 220 to the main group 210. The main group 210 may perform the specific function based on the signal provided from the sub-group 220.

The electronic device 101 may control the state of the sub-group 220 by using the standby power saving group 230. Upon identifying a triggering signal based on a signal provided from the outside, the electronic device 101 may control the state of the sub-group 220 using the standby power saving group 230. The triggering signal may be a signal indicating activation of the sub-group 220 (e.g., the second power circuit 209). Upon identifying the triggering signal based on the signal provided from the outside using the standby power saving group 230, the electronic device 101 may provide a wake-up signal from the standby power saving group 230 to the sub-group 220. The wake-up signal may be a signal for switching the state of the sub-group 220 from the inactive state (e.g., the off state) to the activate state. Upon receiving the signal (e.g., the wake-up signal) from the standby power saving group 230 in the inactive state (e.g., the off state), the sub-group 220 may be switched to the activate state. The sub-group 220 may perform a specific function in the active state. The amount of power consumed by the standby power saving group 230 may be smaller than the amount of power consumed by the sub-group 220 in the inactive state (e.g., the off state). The amount of consumed power may be the amount of power consumed during the same period of time.

The standby power saving group 230 may receive power from the power source 299. When the electronic device 101 does not include the harvesting group 240, the standby power saving group 230 may perform a specific function based on the power provided from the power source 299. The standby power saving group 230 may receive power from the harvesting group 240. When the electronic device 101 includes the harvesting group 240, the standby power saving group 230 may perform a specific function based on the power provided from the harvesting group 240. When the electronic device 101 includes the harvesting group 240, the standby power saving group 230 may perform a specific function based on the power provided from the power source 299 or the power provided from the harvesting group 240.

The harvesting group 240 may capture energy. The harvesting group 240 may rectify the captured energy. The harvesting group 240 may store power. The harvesting group 240 may provide power to the standby power saving group 230.

The function circuit 201 may be a component that performs a specific function of the electronic device 101. The electronic device 101 may perform the specific function of the electronic device by using the function circuit 201. For example, the function circuit 201 may be a component that performs a screen display function, a refrigeration function, a washing function, a communication function, a control function, or an output function. The function circuit 201 may be a component that causes other components (e.g., a display, a thermostat, a motor, and a communication circuit) included in the electronic device 101 to perform the screen display function, the refrigeration function, the washing function, the communication function, the control function, or the output function. When the function circuit 201 performs a specific function or causes another component to perform the specific function, the electronic device 101 may be said to perform the specific function. The function circuit 201 may be understood as a function performing module. The type of the specific function performed by the function circuit 201 is not limited.

The first power circuit 203 may provide power to the function circuit 201. The electronic device 101 may provide power to the function circuit 201 through the first power circuit 203. The first power circuit 203 may include a rectifier (e.g., an AC-DC conversion circuit), a converter (e.g., a DC-DC conversion circuit), a regulator, or a battery. As far as it is capable of providing specified power to the function circuit 201, any component may be included in the first power circuit 203. The function circuit 201 may perform a specific function based on the power provided from the first power circuit 203.

The controller 207 may control the switch 205. The controller 207 may control to provide power from the power source 299 to the first power circuit 203 by controlling on/off of the switch 205. When the switch 205 is controlled to be on by the controller 207, power may be provided from the power source 299 to the first power circuit 203. When the switch 205 is controlled to be off by the controller 207, power may not be provided from the power source 299 to the first power circuit 203. When the switch 205 is controlled to be off by the controller 207, the first power circuit 203 and the function circuit 201 may not consume power.

The controller 207 may control the function circuit 201. The controller 207 may control the function circuit 201 to perform a specific function. The controller 207 may control an execution range (e.g., an execution time, an execution intensity, an execution mode, and so on) of the specific function performed by the function circuit 201. The function circuit 201 may perform the specific function under the control of the controller 207. The controller 203 may control the first power circuit 203. The controller 203 may control power (e.g., the magnitude of power) provided from the first power circuit 203 to the function circuit 201. The controller 203 may control other components included in the electronic device 101, which will be apparent to those skilled in the art.

The second power circuit 209 may include a power conversion circuit (e.g., an AC-DC conversion circuit). The second power circuit 209 may convert power provided from the power source 299 and provide the converted power to other components (e.g., the controller 207 or the communication module 211) of the electronic device 101. The implementation method of the second power circuit 209 is not limited.

The second power circuit 209 may provide power to the controller 207. The electronic device 101 may provide power to the controller 207 through the second power circuit 209. The second power circuit 209 may provide power to the controller 207 based on power provided from the power source 299. Upon receiving power from the second power circuit 209 in the inactive state (e.g., the off state), the controller 207 may be switched to the active state. The controller 207 may perform a specific function in the active state. The controller 207 may not consume power in the off state.

The second power circuit 209 may provide power to the communication module 211. The electronic device 101 may provide power to the communication module 211 through the second power circuit 209. The second power circuit 209 may provide power to the communication module 211 based on power provided from the power source 299. Upon receiving power from the second power circuit 209 in the inactive state (e.g., the off state), the communication module 211 may be switched to the active state. The communication module 211 may perform a specific function in the active state. The communication module 211 may not consume power in the off state.

The communication module 211 may receive a signal from the outside. The communication module 211 may be operatively connected to the controller 207. The electronic device 101 (e.g., the controller 207) may receive a signal from the outside (e.g., the first external device 103 or the second external device 105) through the communication module 211. The electronic device 101 (e.g., the controller 207) may control the function circuit 201 based on the signal received from the outside (e.g., the first external device 103 or the second external device 105) through the communication module 211.

The second power circuit 209 may be switched from the inactive state (e.g., the off state) to the active state based on a signal (e.g., a wake-up signal) provided from the signal detector 215. The second power circuit 209 may not provide power to the controller 207 in the inactive state. The second power circuit 209 may not provide power to the communication module 211 in the inactive state. The second power circuit 209 may provide power to the controller 207 in the active state. The second power circuit 209 may provide power to the communication module 211 in the active state. The second power circuit 209 may provide power to the controller 207 based on a signal (e.g., a wake-up signal provided from the signal detector 215. The second power circuit 209 may provide power to the communication module 211 based on the signal (e.g., the wake-up signal) provided from the signal detector 215.

The signal detector 215 may output the signal (e.g., the wake-up signal) to the second power circuit 209. When the second power circuit 209 is in the inactive state (e.g., the off state), the signal detector 215 may provide the signal (e.g., the wake-up signal) to the second power circuit 209. Upon identifying a triggering signal based on a signal provided from the outside (e.g., the first external device 103 or the second external device 105), the signal detector 215 may provide the signal (e.g., the wake-up signal) to the second power circuit 209.

The signal detector 215 may be maintained in the active state by a power source (e.g., power provided from the power source 299, power provided from the harvesting group 240, or power provided from a separate power source (e.g., the battery) mounted on the electronic device 101.

The signal detector 215 may receive power from the power source 299. The signal detector 215 may be maintained in the active state based on the power provided from the power source 299. When the electronic device 101 does not include the harvesting group 240, the signal detector 215 may be maintained in the active state or perform a specific function, based on the power provided from the power source 299.

The signal detector 215 may receive power from the harvesting group 240. The signal detector 215 may be maintained in the active state based on the power provided from the harvesting group 240. When the electronic device 101 includes the harvesting group 240, the signal detector 215 may be maintained in the active state or perform a specific function, based on the power provided from the harvesting group 240. When the electronic device 101 includes the harvesting group 240, the signal detector 215 may be maintained in the active state or perform a specific function, based on power provided from the power source 299 or based on the power provided from the harvesting group 240.

The harvester 221 may capture energy. The electronic device 101 may capture energy using the harvester 221. The harvester 221 may capture energy based on solar energy, vibration, heat, hydraulic power, or a signal (e.g., an IR signal, a Wi-Fi signal, a BLE signal, or the like). The method of capturing energy by the harvester 221 is not limited.

According to an embodiment, the harvester 221 may include a transmitter that transmits a BLE signal using hydraulic power (e.g., a water flow) and a collector that captures energy based on the BLE signal transmitted from the transmitter. The electronic device 101 may periodically control a switch (e.g., a switch that controls the flow of water available to the transmitter) included in the electronic device 101 (e.g., the harvester 221) so that the transmitter that transmits a BLE signal using hydraulic power (e.g., a water flow) periodically generates a BLE signal. The transmitter that transmits a BLE signal using hydraulic power (e.g., a water flow) may be wiredly connected to the battery 219. The electronic device 101 may store water used for capturing energy. When the amount of stored water is equal to or greater than a reference value, the electronic device 101 may use the stored water to wash the interior of the electronic device 101.

The power conversion circuit 217 may convert the energy captured by the harvester 221. The electronic device 101 may convert the energy captured by the harvester 221 using the power conversion circuit 217. The power conversion circuit 217 may include an AC-DC conversion circuit and/or a DC-DC conversion circuit. The method of converting power by the power conversion circuit 217 is not limited. The operation of converting power by the power conversion circuit 217 may be rectification. For example, the electronic device 101 may rectify DC power captured based on solar power into DC power using the power conversion circuit 217 (e.g., a rectifier). For example, the electronic device 101 may rectify AC power captured based on vibration into DC power using the power conversion circuit 217 (e.g., the rectifier). For example, the electronic device 101 may rectify DC power captured based on heat into DC power using the power conversion circuit 217 (e.g., the rectifier). For example, the electronic device 101 may rectify DC power captured based on hydraulic power into DC power using the power conversion circuit 217 (e.g., the rectifier). For example, the electronic device 101 may rectify AC power captured based on a signal (e.g., an IR signal, a Wi-Fi signal, a BLE signal, or the like) into DC power using the power conversion circuit 217 (e.g., the rectifier).

The power conversion circuit 217 may provide the rectified power (e.g., the converted power) to the signal detector 215. The signal detector 215 may be maintained in the active state or perform a specific function based on the power provided from the power conversion circuit 217.

The power conversion circuit 217 may provide the rectified power (e.g., the converted power) to the battery 219. The battery 219 may store the power provided from the power conversion circuit 217.

The battery 219 may provide the stored power to the signal detector 215. The signal detector 215 may be maintained in the active state or perform a specific function based on the power provided from the battery 219.

The battery 219 may provide the stored power to the power conversion circuit 217. The power conversion circuit 217 may transmit the power provided from the battery 219 to the signal detector 215.

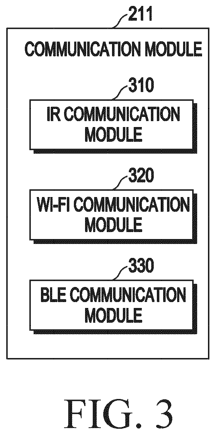

FIG. 3 is a block diagram illustrating a communication module according to an embodiment.

The communication module 211 may include a plurality of communication modules, as illustrated in FIG. 3. FIG. 3 is intended to describe exemplary components that may be included in the communication module 211, and the types of components included in the communication module 211 are not limited to the embodiment of FIG. 3. Referring to FIG. 3, the communication module 211 may include an infrared (IR) communication module 310, a wireless fidelity (Wi-Fi) communication module 320, and/or a Bluetooth low energy (BLE) communication module 330. Although the Wi-Fi communication module 320 and the BLE communication module 330 are shown in FIG. 3 as separate components, the Wi-Fi communication module 320 and the BLE communication module 330 may be implemented as a single component. The communication module 211 may include one communication module (e.g., the IR communication module, the Wi-Fi communication module, or the BLE communication module).

The electronic device 101 may receive a signal from an external device (e.g., the first external device 103 or the second external device 105) through the communication module 211. For example, the electronic device 101 may receive an IR signal from an external device (e.g., the first external device 103 or the second external device 105) through the communication module 211 (e.g., the IR communication module 310). For example, the electronic device 101 may receive a Wi-Fi signal from an external device (e.g., the first external device 103 or the second external device 105) through the communication module 211 (e.g., the Wi-Fi communication module 320). For example, the electronic device 101 may receive a BLE signal from an external device (e.g., the first external device 103 or the second external device 105) through the communication module 211 (e.g., the BLE communication module 330).

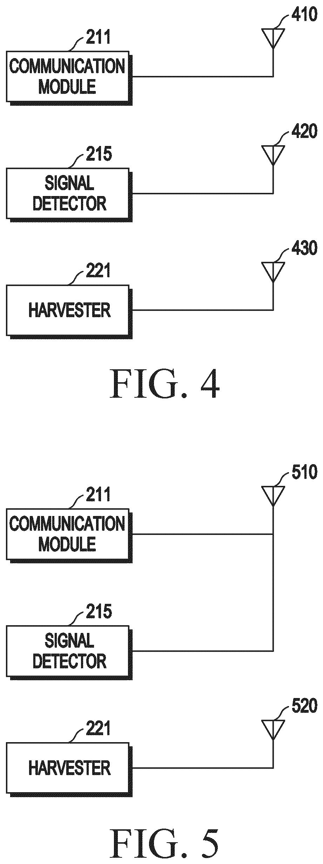

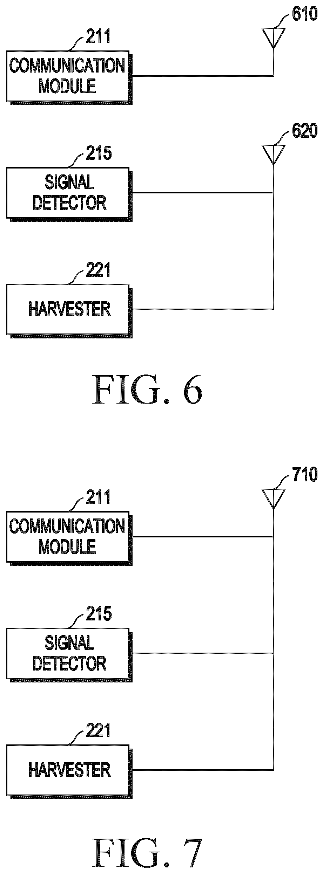

FIG. 4 is a diagram illustrating a communication module, a signal detector, and a harvester according to an embodiment. FIG. 5 is a diagram illustrating a communication module, a signal detector, and a harvester according to an embodiment. FIG. 6 is a diagram illustrating a communication module, a signal detector, and a harvester according to an embodiment. FIG. 7 is a diagram illustrating a communication module, a signal detector, and a harvester according to an embodiment.

FIGS. 5, 6, and 7 are diagrams illustrating embodiments in which at least two of the communication module 211, the signal detector 215, and the harvester 221 share the same receiver.

Referring to FIG. 4, the communication module 211, the signal detector 215, and the harvester 221 may receive signals through different receivers (e.g., 410, 420, and 430), respectively. For example, the electronic device 101 may include a first receiver 410 and receive a signal using the communication module 211 through the first receiver 410. For example, the electronic device 101 may include a second receiver 420 and receive a signal using the signal detector 215 through the second receiver 420. For example, the electronic device 101 may include a third receiver 430 and receive a signal using the harvester 221 through the third receiver 430.

Referring to FIG. 5, the communication module 211 and the signal detector 215 may receive a signal through a common receiver (e.g., 510). The harvester 221 may receive a signal through a receiver (e.g., 520) different from that for the communication module 211 and the signal detector 215. For example, the electronic device 101 may include a second receiver 520 and receive a signal using the harvester 221 through the second receiver 520. For example, the electronic device 101 may include a first receiver 510 and receive a signal using the communication module 211 through the first receiver 510. The electronic device 101 may include the first receiver 510 and receive a signal using the signal detector 215 through the first receiver 510. A signal received through the first receiver 510 may be transmitted to the communication module 211 and the signal detector 215. The electronic device 101 may include a distributor connected to the first receiver 510 and distribute a signal received through the first receiver 510 from the distributor to the communication module 211 or the signal detector 215.

Referring to FIG. 6, the signal detector 215 and the harvester 221 may receive a signal through a common receiver (e.g., 620). The communication module 211 may receive a signal through a receiver (e.g., 610) different from that for the signal detector 215 and the harvester 221. For example, the electronic device 101 may include a first receiver 610 and receive a signal using the communication module 211 through the first receiver 610. For example, the electronic device 101 may include a second receiver 620 and receive a signal using the signal detector 215 through the second receiver 620. The electronic device 101 may include the second receiver 620 and receive a signal using the harvester 221 through the second receiver 620. A signal received through the second receiver 620 may be transmitted to the signal detector 215 and the harvester 221. The electronic device 101 may include a distributor connected to the second receiver 620 and distribute a signal received through the second receiver 620 from the distributor to the signal detector 215 or the harvester 221.

Referring to FIG. 7, the communication module 211, the signal detector 215, and the harvester 221 may receive a signal through a common receiver (e.g., 710). For example, the electronic device 101 may include a receiver 710 and receive a signal using the communication module 211 through the receiver 710. The electronic device 101 may include the receiver 710 and receive a signal using the signal detector 215 through the receiver 710. The electronic device 101 may include the receiver 710 and receive a signal using the harvester 221 through the receiver 710. The signal received through the receiver 710 may be transmitted to the communication module 211, the signal detector 215, and the harvester 221. The electronic device 101 may include a distributor connected to the receiver 710 and distribute a signal received through the receiver 710 from the distributor to the communication module 211, the signal detector 215, or the harvester 221.

The receivers (e.g., 410, 420, 430, 510, 520, 610, 620, and 710) disclosed in FIGS. 4, 5, 6, and 7 may be receivers (e.g., IR signal receivers, coils, or antennas) suitable for the communication module 211 (e.g., the IR communication module, the Wi-Fi communication module, or the BLE communication module). In FIGS. 4, 5, 6, and 7, one receiver (e.g., 410, 420, 430, 510, 520, 610, 620, or 710) is shown as connected to the communication module 211, the signal detector 215, or the harvester 221. However, this is for convenience of description, and a plurality of receivers may be connected to the communication module 211, the signal detector 215, or the harvester 221. For example, when the communication module 211 includes a plurality of communication modules, a plurality of receivers suitable for the plurality of communication modules included in the communication module 211 may be connected to the communication module 211.

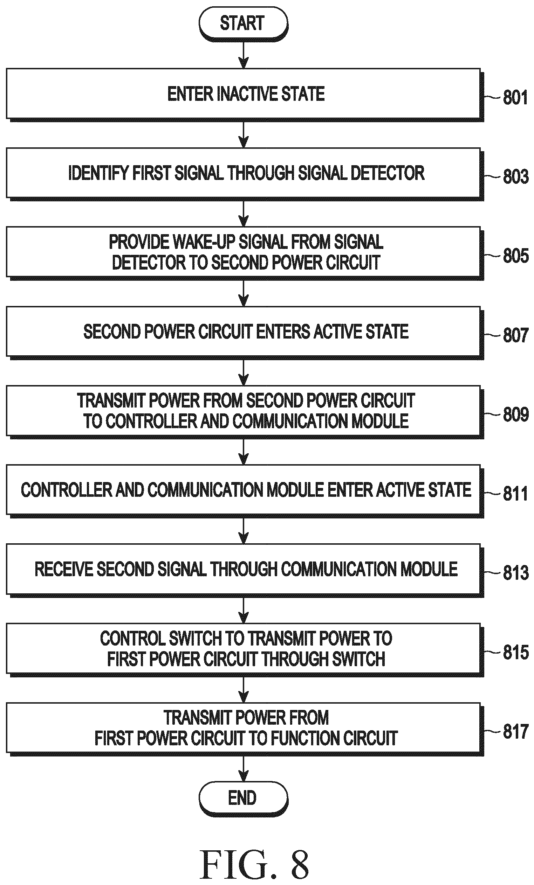

FIG. 8 is a flowchart illustrating a method of operating a power control circuit according to an embodiment.

At least some of the operations of FIG. 8 may be omitted. The order of the operations of FIG. 8 may be changed. An operation other than the operations of FIG. 8 may be performed before, during, or after the operations of FIG. 8.

Referring to FIG. 8, according to an embodiment, in operation 801, the electronic device 101 (e.g., the power control circuit 110) may enter the inactive state (e.g., the off state or the standby state). Some components of the electronic device 101 may enter the inactive state (e.g., the off state or the standby state). The function circuit 201 may enter the off state. The first power circuit 203 may enter the off state. The switch 205 may enter the off state. The controller 207 may enter the off state. The communication module 211 may enter the off state. The second power circuit 209 may enter the off state.

According to an embodiment, when another component of the electronic device 101 (e.g., the power control circuit 110) enters the inactive state (e.g., the off state or the standby state), the signal detector 215 may be maintained in the active state. When another component of the electronic device 101 is in the inactive state, the signal detector 215 may be maintained in the active state. The signal detector 215 may be maintained in the active state based on power provided from the power source 299. The signal detector 215 may be maintained in the active state based on power provided from the power conversion circuit 217. The signal detector 215 may be maintained in the active state based on power provided from the battery 219. The signal detector 215 may be maintained in a state for receiving a signal provided from an external source in the active state.

According to the embodiment, when another component of the electronic device 101 (e.g., the power control circuit 110) enters the inactive state (e.g., the off state or the standby state), the signal detector 215 may be maintained in the active state. The signal detector 215 may be maintained in the active state based on power provided from the power source 299. The signal detector 215 may be maintained in the active state based on power provided from the power conversion circuit 217. The signal detector 215 may be maintained in the active state based on power provided from the battery 219. The signal detector 215 may be maintained in a state for receiving a signal provided from an external source in the active state.

In operation 803, the electronic device 101 (e.g., the power control circuit 110) may detect a first signal provided from an external device (e.g., the first external device 103 or the second external device 105) through the signal detector 215. The first signal may be a signal for activating the sub-group 220 of the electronic device 101 (e.g., the power control circuit 110). The first signal may be an IR signal, a Wi-Fi signal, or a BLE signal, depending on a communication scheme of a communication module of the external device (e.g., the first external device 103 or the second external device 105) that transmitted the first signal. When the electronic device 101 (e.g., the power control circuit 110) includes a common receiver (e.g., 510 of FIG. 5 or 710 of FIG. 7), the electronic device 101 (e.g., the power control circuit 110) may detect the first signal provided from the external source (e.g., the first external device 103 or the second external device 105), using the signal detector 215 through the common receiver (e.g., 510 of FIG. 5 or 710 of FIG. 7). When the electronic device 101 (e.g., the power control circuit 110) includes a first receiver (e.g., 410 of FIG. 4 or 610 of FIG. 6) connected to the communication module 211 and a second receiver (e.g., 420 of FIG. 4 or 620 of FIG. 6) connected to the signal detector 215, the electronic device 101 (e.g., the power control circuit 110) may identify the first signal provided from the external device (e.g., the first external device 103 or the second external device 105), using the signal detector 215 through the second receiver (e.g., 420 of FIG. 4 or 620 of FIG. 6).

The first signal provided from the outside may be a signal provided directly from the first external device 103 (e.g., the communication module of the first external device 103) to the electronic device 101 (e.g., the power control circuit 110). The first signal provided from the outside may be a signal provided from the second external device 105 to the electronic device 101 (e.g., the power control circuit 110). The first signal provided from the outside may be a signal provided from the second external device 105 (e.g., the relay device) to the electronic device 101 (e.g., the power control circuit 110) based on a signal provided from the first external device 103 to the second external device 105 (e.g., the relay device). The signal detector 215 may demodulate the received signal. The signal detector 215 may identify a triggering signal by demodulating the received signal.

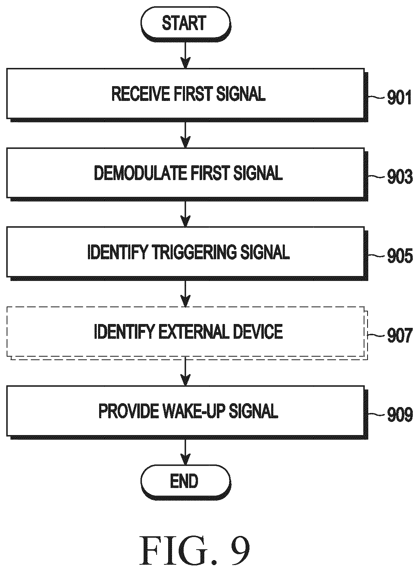

In operation 805, the signal detector 215 may provide a signal (e.g., a wake-up signal) to the second power circuit 209. The signal detector 215 may provide the wake-up signal to the second power circuit 209 based on identifying the first signal provided from the outside (e.g., the first external device 103 or the second external device 105). The signal detector 215 may provide the wake-up signal to the second power circuit 209 based on identifying the triggering signal by demodulating the first signal provided from the outside. The signal detector 215 may identify the external device (e.g., the first external device 103) related to the first signal based on the triggering signal (e.g., information about an ID of the external device included in the triggering signal) identified by demodulating the first signal. The signal detector 215 may provide the wake-up signal to the second power circuit 209 based on the external device (e.g., the first external device 103) related to the first signal being a specified device. The first signal provided from the outside and the reception and demodulation of the first signal through the signal detector 215 will be described with reference to FIG. 9.

In operation 807, the second power circuit 209 may enter the active state from the inactive state (e.g., the off state). Upon receiving the signal (e.g., the wake-up signal) from the signal detector 215, the second power circuit 209 may enter the active state from the inactive state (e.g., the off state).

In operation 809, the second power circuit 209 may transmit power to the controller 207 and the communication module 211 in the active state. Based on entering the active state upon receiving the wake-up signal, the second power circuit 209 may transmit power to the controller 207 and the communication module 211.

In operation 811, upon receiving power from the second power circuit 209, the controller 207 may enter the active state from the inactive state (e.g., the off state). Upon receiving power from the second power circuit 209, the communication module 211 may enter the active state from the inactive state (e.g., the off state).

In operation 813, the controller 207 may receive a second signal provided from an external source (e.g., the first external device 103 or the second external device 105) through the communication module 211 in the active state. The second signal may be a signal for controlling the main group 210 of the electronic device 101. The second signal may be an IR signal, a Wi-Fi signal, or a BLE signal depending on a communication scheme of the communication module of the external device (e.g., the first external device 103 or the second external device 105) that transmitted the second signal. When the electronic device 101 (e.g., the power control circuit 110) includes a common receiver (e.g., 510 of FIG. 5 or 710 of FIG. 7), the electronic device 101 (e.g., the power control circuit 110) may identify the second signal provided from the outside (e.g., the first external device 103 or the second external device 105), using the communication module 211 through the common receiver (e.g., 510 of FIG. 5 or 710 of FIG. 7). When the electronic device 101 (e.g., the power control circuit 110) includes a first receiver (e.g., 410 of FIG. 4 or 610 of FIG. 6) connected to the communication module 211 and a second receiver (e.g., 420 of FIG. 4 or 620 of FIG. 6) connected to the signal detector 215, the electronic device 101 (e.g., the power control circuit 110) may identify the second signal provided from the outside (e.g., the first external device 103 or the second external device 105), using the communication module 211 through the first receiver (e.g., 410 of FIG. 4 or 610 of FIG. 6). For example, both the first signal of operation 803 and the second signal of operation 813 may be signals transmitted from the communication module of the first external device 103 or the communication module of the second external device 105. For example, the first signal of operation 803 may be a signal transmitted from the communication module of the first external device 103, and the second signal of operation 813 may be a signal transmitted from the communication module of the second external device 105.

In operation 815, upon receiving the second signal (e.g., the signal for controlling the main group 210) through the communication module 211, the controller 207 may control the switch 205 to transmit power from the power source 299 to the first power circuit 203 through the switch 205. When the switch 205 is controlled to be on, power may be transmitted from the power source 299 to the first power circuit 203 through the switch 205.

In operation 817, the first power circuit 203 may transmit power to the function circuit 201 based on the power transmitted from the power source 299 through the switch 205. The function circuit 201 may perform a specific function based on the power transmitted from the first power circuit 203.

FIG. 9 is a flowchart illustrating a method of operating a power control circuit according to an embodiment.

At least some of the operations of FIG. 9 may be omitted. The order of the operations of FIG. 9 may be changed. An operation other than the operations of FIG. 9 may be performed before, during, or after the operations of FIG. 9. At least some of the operations of FIG. 9 may correspond to at least some of the operations of FIG. 8. The operations of FIG. 9 may be performed in organic conjunction with the operations of FIG. 8.

Referring to FIG. 9, according to an embodiment, in operation 901, the electronic device 101 (e.g., the power control circuit 110) may identify a first signal provided from an external device (e.g., the first external device 103 or the second external device 105) through the signal detector 215. Operation 901 may be operation 803 of FIG. 8.

The first signal received in operation 901 may be a signal modulated by the communication module of the external device (e.g., the first external device 103 or the second external device 105). For example, the second signal received in operation 813 of FIG. 8 may be a signal transmitted using a carrier frequency from the communication module of the external device (e.g., the first external device 103 or the second external device 105), whereas the first signal received in operation 901 may be a signal modulated by the communication module of the external device (e.g., the first external device 103 or the second external device 105). The first signal may be based on a protocol in which energy consumed when processing data in the signal detector 215 is less than energy consumed when processing the second signal. For example, the first signal may be a signal with a reduced effective data rate. The first signal received in operation 901 (or a triggering signal of operation 903) may include a carrier burst (e.g., a part including information indicating the start of communication), a preamble (e.g., a part including information indicating that the signal has a reduced effective data rate), and a pattern (e.g., a part including identification information about the device transmitting the signal, and control information). The configuration of the first signal received in operation 901 is not limited. The first signal received in operation 901 may be an IR signal, a Wi-Fi signal, or a BLE signal, depending on the communication scheme of the communication module of the external device (e.g., the first external device 103 or the second external device 105) that transmitted the first signal. The type of the first signal received in operation 901 is not limited.

In operation 903, the signal detector 215 may demodulate the first signal received in operation 901. The signal detector 215 may demodulate the first signal by converting the frequency of the first signal. The signal detector 215 may demodulate the first signal depending on the type of the first signal.

In operation 905, the signal detector 215 may identify a triggering signal by demodulating the received first signal. The triggering signal may include identification information about the device related to the signal and/or control information (e.g., information indicating activation of the sub-group 220 (e.g., the second power circuit 209)).

In operation 907, the signal detector 215 may identify the external device (e.g., the first external device 103 or the second external device 105) related to the first signal, based on the triggering signal. The signal detector 215 may identify the external device (e.g., the first external device 103 or the second external device 105) related to the first signal, based on the identification information included in the triggering signal. The signal detector 215 may identify whether the external device (e.g., the first external device 103 or the second external device 105) related to the first signal is a specified device (e.g., a device permitted to be controlled by the electronic device 101 (e.g., the power control circuit 110)). Operation 907 may be omitted.

In operation 909, the signal detector 215 may provide a wake-up signal to the second power circuit 209. The signal detector 215 may provide the wake-up signal to the second power circuit 209, based on identifying the triggering signal in operation 905. The signal detector 215 may provide the wake-up signal to the second power circuit 209, based on identifying that the external device (e.g., the first external device 103 or the second external device 105) related to the first signal is a specified device (e.g., a device permitted to be controlled by the electronic device 101 (e.g., the power control circuit 110)) in operation 907.

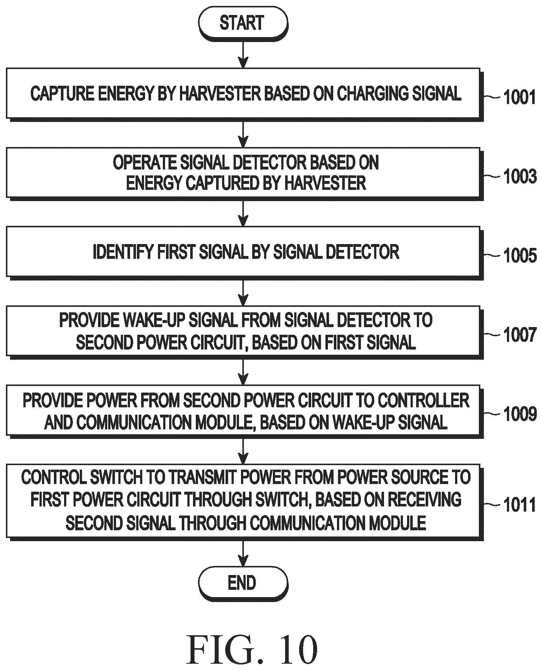

FIG. 10 is a flowchart illustrating a method of operating a power control circuit according to an embodiment.

At least some of the operations of FIG. 10 may be omitted. The order of the operations of FIG. 10 may be changed. An operation other than the operations of FIG. 10 may be performed before, during, or after the operations of FIG. 10. At least some of the operations of FIG. 10 may correspond to at least some of the operations of FIG. 8 or FIG. 9. The operations of FIG. 10 may be performed in organic conjunction with the operations of FIGS. 8 and 9.

Referring to FIG. 10, according to an embodiment, in operation 1001, the harvester 221 may capture energy based on a charging signal from an external device (e.g., the first external device 103 or the second external device 105). The charging signal may be a signal (e.g., an IR signal, a Wi-Fi signal, or a BLE signal) transmitted from the communication module of the external device (e.g., the first external device 103 or the second external device 105) for energy capture in the harvester 221. The external device (e.g., the first external device 103 or the second external device 105) may transmit the charging signal to the electronic device 101 (e.g., the power control circuit 110). The external device (e.g., the first external device 103 or the second external device 105) may sequentially transmit the charging signal, a first signal (e.g., the first signal of operation 803 in FIG. 8), and a second signal (e.g., the second signal of operation 813 in FIG. 8) to the electronic device 101 (e.g., the power control circuit 110).

In operation 1003, the signal detector 215 may operate based on the energy captured by the harvester 221. The signal detector 215 may be maintained in the active state based on the energy captured by the harvester 221 in operation 1001. The harvester 221 may capture energy and provide the captured energy to the power conversion circuit 217. The power conversion circuit 217 may rectify the power provided from the harvester 221. The power conversion circuit 217 may provide the rectified power to the signal detector 215. The power conversion circuit 217 may provide the rectified power to the battery 219. The battery 219 may store the power provided from the power conversion circuit 217. The battery 219 may provide the stored power to the signal detector 215. The battery 219 may also provide the stored power to the power conversion circuit 217. The power conversion circuit 217 may transmit the power provided from the battery 219 to the signal detector 215.

In operation 1005, the signal detector 215 may identify a first signal (e.g., the first signal of operation 803 in FIG. 8) transmitted from the external device (e.g., the first external device 103 or the second external device 105) in the active state. Operation 1005 may correspond to operation 803 of FIG. 8.

In operation 1007, a wake-up signal may be provided from the signal detector 215 to the second power circuit 209 based on the first signal of operation 1005. Operation 1007 may correspond to operation 805 of FIG. 8 or operation 909 of FIG. 9.

In operation 1009, power may be provided from the second power circuit 209 to the controller 207 and the communication module 211 based on the wake-up signal. Operation 1009 may correspond to operation 809 of FIG. 8.

In operation 1011, based on reception of the second signal (e.g., the second signal of operation 813 in FIG. 8) through the communication module 211, the controller 207 may control the switch 205 so that power is transmitted from the power source 299 to the first power circuit 203 through the switch 205. Operation 1011 may correspond to operation 815 of FIG. 8.

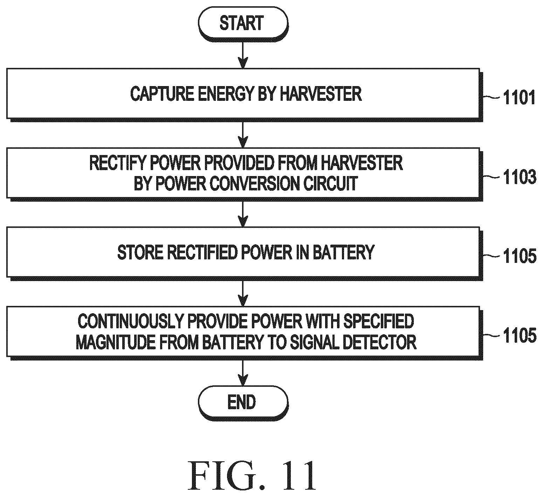

FIG. 11 is a flowchart illustrating a method of operating a power control circuit according to an embodiment.

At least some of the operations of FIG. 11 may be omitted. The order of the operations of FIG. 11 may be changed. An operation other than the operations of FIG. 11 may be performed before, during, or after the operations of FIG. 11. At least some of the operations of FIG. 11 may correspond to at least some of the operations of FIG. 8, FIG. 9, or FIG. 10. The operations of FIG. 11 may be performed in organic conjunction with the operations of FIGS. 8, 9, and 10.

Referring to FIG. 11, according to an embodiment, the harvester 211 may capture energy in operation 1101.

In operation 1103, the power conversion circuit 217 may rectify the power provided from the harvester 211.

In operation 1105, the battery 219 may store the power rectified by the power conversion circuit 217. The power conversion circuit 217 may provide the rectified power to the battery 219. The battery 219 may store the power provided from the power conversion circuit 217.

In operation 1107, the battery 219 may continuously provide power with a specified magnitude in the stored power to the signal detector 215. The signal detector 215 may operate based on the power provided from the battery 219. The signal detector 215 may be maintained in the active state based on the power provided from the battery 219. In the active state, the signal detector 215 may identify the first signal (e.g., the first signal of operation 803 in FIG. 8) transmitted from the external device (e.g., the first external device 103 or the second external device 105).

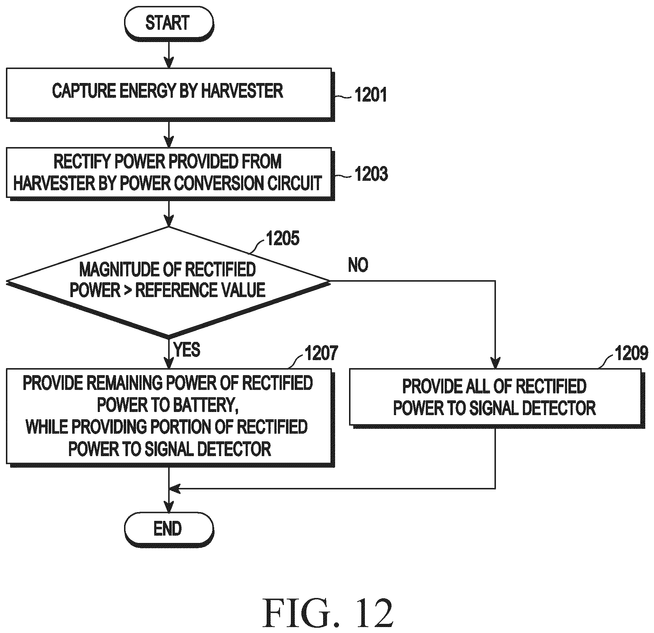

FIG. 12 is a flowchart illustrating a method of operating a power control circuit according to an embodiment.

At least some of the operations of FIG. 12 may be omitted. The order of the operations of FIG. 12 may be changed. An operation other than those of FIG. 12 may be performed before, during, or after performing the operations of FIG. 12. At least some of the operations of FIG. 12 may correspond to at least some of the operations of FIG. 8, FIG. 9, FIG. 10, or FIG. 11. The operations of FIG. 12 may be performed in organic conjunction with the operations of FIGS. 8, 9, 10 and 11.

Referring to FIG. 12, according to an embodiment, the harvester 221 may capture energy in operation 1201.

In operation 1203, the power conversion circuit 217 may rectify power provided from the harvester 211.

In operation 1205, the magnitude of the power rectified by the power conversion circuit 217 may be compared with a reference value (e.g., a specified magnitude).

In operation 1207, based on the magnitude of the power rectified in operation 1203 exceeding the reference value (e.g., the specified magnitude), the power conversion circuit 217 may provide the remaining power (e.g., the remaining power of the rectified power, except for power with the specified magnitude) to the battery 219, while providing a portion (e.g., the power with the specified magnitude) of the rectified power to the signal detector 215. The battery 219 may store the power provided from the power conversion circuit 217.

In operation 1209, based on the magnitude of the power rectified in operation 1203 being less than or equal to the reference value (e.g., the specified magnitude), the power conversion circuit 217 may provide all of the rectified power to the signal detector 215.

According to an embodiment, based on the magnitude of the power rectified in operation 1203 being less than or equal to the reference value (e.g., the specified magnitude), the power conversion circuit 217 may receive additional power from the battery 219. Based on the magnitude of the power rectified in operation 1203 being less than or equal to the reference value (e.g., the specified magnitude), the battery 219 may provide the additional power to the power conversion circuit 217. The battery 219 may provide the additional power to the power conversion circuit 217 by as much as the difference between the magnitude of the power rectified in operation 1203 and the reference value (e.g., the specified magnitude). Based on the magnitude of the power rectified in operation 1203 being less than or equal to the reference value (e.g., the specified magnitude), the power conversion circuit 217 may provide all of the power rectified in operation 1203 and the additional power provided from the battery 219 to the signal detector 215.

According to an embodiment, based on the magnitude of the power rectified in operation 1203 being less than or equal to the reference value (e.g., the specified magnitude), the battery 219 may provide as much additional power as the difference between the magnitude of the power rectified in operation 1203 and the reference value (e.g., the specified magnitude) to the signal detector 215. The battery 219 may provide the additional power to the signal detector 215, while all of the power rectified in operation 1203 is provided from the power conversion circuit 217 to the signal detector 215.

It will be understood by those skilled in the art that the embodiments described in the specification may be organically applied to each other within an applicable scope. At least some of the embodiments described in the specification may be combined within a noncontradictory scope as long as the combination does not cause an obvious technical conflict. It will be understood by those skilled in the art that at least some of the operations of an embodiment described in the specification may be omitted, and at least some of the operations of an embodiment and at least some of the operations of another embodiment may be organically connected and applied. The order of at least some of the operations of an embodiment described in the specification may be changed.

According to an embodiment, the power control circuit 110 may include the switch 205, the communication module 211, the controller 207, the signal detector 215 configured to output a wake-up signal based on a first signal provided from outside, and the second power circuit configured to transmit power to the controller 207 and the communication module 211, based on the wake-up signal output from the signal detector 215. The controller 207 may be configured to control the switch 205 to transmit power from the power source 299 to a first power circuit 203 of an electronic device 101, based on a second signal obtained through the communication module 211.

According to an embodiment, the signal detector 215 may be configured to identify a triggering signal by demodulating the first signal. The signal detector 215 may be configured to, based on the identification of the triggering signal, provide the wake-up signal to the second power circuit 209.

According to an embodiment, the signal detector 215 may be configured to identify an external device 103 related to the first signal, based on the triggering signal. The signal detector 215 may be configured to, based on the external device 103 being a specified device, provide the wake-up signal to the second power circuit 209.

According to an embodiment, the first signal and the second signal may be transmitted through the same communication module 211 of the external device 103.

According to an embodiment, the first signal may be transmitted directly from the external device 103. The second signal may be transmitted from the relay device 105, based on a signal provided from the external device 103 to the relay device 105.

According to an embodiment, the power control circuit 110 may include the common receiver 510 or 710 connected to the communication module 211 and the signal detector 215. The signal detector 215 may be configured to receive the first signal through the common receiver 510 or 710. The communication module 211 may be configured to receive the second signal through the common receiver 510 or 710.

According to an embodiment, the signal detector 215 may be configured to receive power from the power source 299.

According to an embodiment, the power control circuit 110 may include the harvester 221 configured to capture energy, and the power conversion circuit 217 connected to the harvester 221. The power conversion circuit 217 may be configured to rectify power provided from the harvester 221. The signal detector 215 may be configured to operate based on the power rectified by the power conversion circuit 217.

According to an embodiment, the harvester 221 may be configured to capture the energy based on a charging signal provided from the external device 103 or 105.

According to an embodiment, the power control circuit 110 may include the battery 219 connected to the power conversion circuit 217.

According to an embodiment, the battery 219 may be configured to store the power rectified by the power conversion circuit 217. The signal detector 215 may be configured to operate based on power provided from the battery 219.

According to an embodiment, the power conversion circuit 217 may be configured to rectify the power provided from the harvester 221. The power conversion circuit 217 may be configured to, based on a magnitude of the rectified power exceeding a reference value, provide remaining power of the rectified power to the battery 219 while providing a portion of the rectified power to the signal detector 215.

According to an embodiment, the power conversion circuit 217 may be configured to, based on the magnitude of the rectified power being less than or equal to the reference value, provide all of the rectified power to the signal detector 215.

According to an embodiment, the power conversion circuit 217 may be configured to, based on the magnitude of the rectified power being less than or equal to the reference value, transmit additional power provided from the battery 219 to the signal detector 215, while providing all of the rectified power to the signal detector 215.

According to an embodiment, the battery 219 may be configured to provide the additional power to the signal detector 215, while all of the rectified power is provided from the power conversion circuit 217 to the signal detector 215.

According to an embodiment, the electronic device 101 may include the first power circuit 203, the switch 205, the communication module 211, the controller 207, the signal detector 215 configured to output a wake-up signal based on a first signal provided from outside, and the second power circuit 209 configured to transmit power to the controller 207 and the communication module 211, based on the wake-up signal output from the signal detector 215. The controller 207 may be configured to control the switch 205 to transmit power from the power source 299 to a first power circuit 203 of an electronic device 101, based on a second signal obtained through the communication module 211.

According to embodiment, a method of operating the electronic device 101 may include identifying a first signal from outside through the signal detector 215 of the electronic device 101. The method may include providing a wake-up signal from the signal detector 215 to the second power circuit 209 of the electronic device 101. The method may include, based on the second power circuit 209 entering the active state upon receiving the wake-up signal, providing power from the second power circuit 209 to the controller 207 of the electronic device 101 and the communication module 211 of the electronic device 101. The method may include entering the active state by the controller 207 and the communication module, based on the power provided from the second power circuit 209. The method may include receiving a second signal provided from the outside through the communication module 211. The method may include, upon receipt of the second signal, controlling the switch 205 of the electronic device 101 to transmit power from the power source 299 to the first power circuit 203 of the electronic device 101 through the switch 205. The method may include transmitting power from the first power circuit 203 to the function circuit 201, based on the power provided through the switch 205.

According to an embodiment, the method may include identifying a triggering signal by demodulating the first signal in the signal detector 215. The method may include, based on identifying the triggering signal, providing the wake-up signal from the signal detector 215 to the second power circuit 209.

According to an embodiment, the method may include identifying the external device 103 related to the first signal based on the triggering signal by the signal detector 215. The method may include providing the wake-up signal from the signal detector 215 to the second power circuit 209, based on the external device 103 being a specified device.

According to an embodiment, the first signal and the second signal may be transmitted through the same communication module 211 of the external device 103.

According to an embodiment, the first signal may be transmitted directly from the external device 103. The second signal may be transmitted from the relay device 105 based on a signal provided from the external device 103 to the relay device 105.

According to an embodiment, the first signal may be received through the common receiver 510 or 710 by the signal detector 215. The second signal may be received through the common receiver 510 or 710 by the communication module 211.

According to an embodiment, the method may include providing power from the power source 299 to the signal detector 215.

According to an embodiment, the method may include capturing energy by the harvester 221. The method may include rectifying power provided from the harvester 221 by the power conversion circuit 217. The method may include performing an operation by the signal detector 215, based on the power rectified by the power conversion circuit 217.

According to an embodiment, the method may include capturing the energy based on a charging signal provided from the external device 103 or 105 by the harvester 221.

According to an embodiment, the method may include storing the power rectified by the power conversion circuit 217 in the battery 219. The method may include performing an operation based on the power provided from the battery 219 by the signal detector 215.

According to an embodiment, the method may include rectifying the power provided from the harvester 221 by the power conversion circuit 217. The method may include, based on a magnitude of the rectified power exceeding a reference value, providing remaining power from the power conversion circuit 217 to the battery 219 while providing a portion of the rectified power from the power conversion circuit 217 to the signal detector 215.

According to an embodiment, the method may include, based on the magnitude of the rectified power being less than or equal to the reference value, providing all of the rectified power from the power conversion circuit 217 to the signal detector 215.

According to an embodiment, the method may include, based on the magnitude of the rectified power being less than or equal to the reference value, transmitting additional power provided from the battery 219 to the power conversion circuit 217 from the power conversion circuit 217 to the signal detector 215, while all of the rectified power is provided from the power conversion circuit 217 to the signal detector 215.

According to an embodiment, the method may include providing the additional power from the battery 219 to the signal detector 215, while all of the rectified power is provided from the power conversion circuit 217 to the signal detector 215.

According to embodiment, in a computer-readable recording medium storing instructions configured to enable the controller 207 of the electronic device 101 to perform at least one operation, the at least one operation may include identifying a first signal from outside through the signal detector 215 of the electronic device 101. The at least one operation may include providing a wake-up signal from the signal detector 215 to the second power circuit 209 of the electronic device 101. The at least one operation may include, based on the second power circuit 209 entering the active state upon receiving the wake-up signal, providing power from the second power circuit 209 to the controller 207 of the electronic device 101 and the communication module 211 of the electronic device 101. The at least one operation may include entering the active state by the controller 207 and the communication module, based on the power provided from the second power circuit 209. The at least one operation may include receiving a second signal provided from the outside through the communication module 211. The at least one operation may include, upon receipt of the second signal, controlling the switch 205 of the electronic device 101 to transmit power from the power source 299 to the first power circuit 203 of the electronic device 101 through the switch 205. The at least one operation may include transmitting power from the first power circuit 203 to the function circuit 201, based on the power provided through the switch 205.

According to an embodiment, the at least one operation may include identifying a triggering signal by demodulating the first signal in the signal detector 215. The at least one operation may include, based on identifying the triggering signal, providing the wake-up signal from the signal detector 215 to the second power circuit 209.

According to an embodiment, the at least one operation may include identifying the external device 103 related to the first signal based on the triggering signal by the signal detector 215. The at least one operation may include providing the wake-up signal from the signal detector 215 to the second power circuit 209, based on the external device 103 being a specified device.

According to an embodiment, the first signal and the second signal may be transmitted through the same communication module 211 of the external device 103.

According to an embodiment, the first signal may be transmitted directly from the external device 103. The second signal may be transmitted from the relay device 105 based on a signal provided from the external device 103 to the relay device 105.

According to an embodiment, the first signal may be received through the common receiver 510 or 710 by the signal detector 215. The second signal may be received through the common receiver 510 or 710 by the communication module 211.

According to an embodiment, the at least one operation may include providing power from the power source 299 to the signal detector 215.

According to an embodiment, the at least one operation may include capturing energy by the harvester 221. The at least one operation may include rectifying power provided from the harvester 221 by the power conversion circuit 217. The at least one operation may include performing an operation by the signal detector 215, based on the power rectified by the power conversion circuit 217.

According to an embodiment, the at least one operation may include capturing the energy based on a charging signal provided from the external device 103 or 105 by the harvester 221.

According to an embodiment, the at least one operation may include storing the power rectified by the power conversion circuit 217 in the battery 219. The at least one operation may include performing an operation based on the power provided from the battery 219 by the signal detector 215.

According to an embodiment, the at least one operation may include rectifying the power provided from the harvester 221 by the power conversion circuit 217. The at least one operation may include, based on a magnitude of the rectified power exceeding a reference value, providing remaining power from the power conversion circuit 217 to the battery 219, providing a portion of the rectified power from the power conversion circuit 217 to the signal detector 215.

According to an embodiment, the at least one operation may include, based on the magnitude of the rectified power being less than or equal to the reference value, providing all of the rectified power from the power conversion circuit 217 to the signal detector 215.

According to an embodiment, the at least one operation may include, based on the magnitude of the rectified power being less than or equal to the reference value, transmitting additional power provided from the battery 219 to the power conversion circuit 217 from the power conversion circuit 217 to the signal detector 215, while all of the rectified power is provided from the power conversion circuit 217 to the signal detector 215.

According to an embodiment, the at least one operation may include providing the additional power from the battery 219 to the signal detector 215, while all of the rectified power is provided from the power conversion circuit 217 to the signal detector 215.

According to an embodiment, the standby power of the electronic device 101 may be reduced through the electronic device 101 and the method of operating the electronic device 101.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element. According to embodiments, each component of the above-described components may include a single entity or multiple entities, and some of the multiple entities may be separately disposed in different components. According to embodiments, one or more of the above-described components may be omitted, or one or more other components may be added. Alternatively or additionally, a plurality of components may be integrated into a single component. In such a case, the integrated component may still perform one or more functions of each of the plurality of components in the same or similar manner as they are performed by a corresponding one of the plurality of components before the integration. According to embodiments, operations performed by the component may be carried out sequentially, in parallel, repeatedly, or heuristically, or one or more of the operations may be executed in a different order or omitted, or one or more other operations may be added.

## Claims

1. A power control circuit (110) comprising:
a switch (205);
a communication module (211);
a controller (207);
a signal detector (215) configured to output a wake-up signal based on a first signal provided from outside; and
a second power circuit configured to transmit power to the controller (207) and the communication module (211), based on the wake-up signal output from the signal detector (215),
wherein the controller (207) is configured to control the switch (205) to transmit power from the power source (299) to a first power circuit (203) of an electronic device (101), based on a second signal obtained through the communication module (211).

2. The power control circuit (110) of claim 1, wherein the signal detector (215) is configured to:
identify a triggering signal by demodulating the first signal, and
based on the identification of the triggering signal, provide the wake-up signal to the second power circuit (209).

3. The power control circuit (110) of claim 1 or 2, wherein the signal detector (215) is configured to:
identify an external device (103) related to the first signal, based on the triggering signal, and
based on the external device (103) being a specified device, provide the wake-up signal to the second power circuit (209).

4. The power control circuit (110) of any one of claims 1 to 3, wherein the first signal and the second signal are transmitted through the same communication module (211) of the external device (103).

5. The power control circuit (110) of any one of claims 1 to 4, wherein the first signal is transmitted directly from the external device (103), and
wherein the second signal is transmitted from a relay device (105), based on a signal provided from the external device (103) to the relay device (105).

6. The power control circuit (110) of any one of claims 1 to 5, further including a common receiver (510; 710) connected to the communication module (211) and the signal detector (215),
wherein the signal detector (215) is configured to receive the first signal through the common receiver (510; 710), and
wherein the communication module (211) is configured to receive the second signal through the common receiver (510; 710).

7. The power control circuit (110) of any one of claims 1 to 6, wherein the signal detector (215) is configured to receive power from the power source (299).

8. The power control circuit (110) of any one of claims 1 to 7, further comprising:
a harvester (221) configured to capture energy; and
a power conversion circuit (217) connected to the harvester (221),
wherein the power conversion circuit (217) is configured to rectify power provided from the harvester (221), and
wherein the signal detector (215) is configured to operate based on the power rectified by the power conversion circuit (217).

9. The power control circuit (110) of any one of claims 1 to 8, wherein the harvester (221) is configured to capture the energy based on a charging signal provided from the external device (103; 105).

10. The power control circuit (110) of any one of claims 1 to 9, further comprising a battery (219) connected to the power conversion circuit (217).

11. The power control circuit (110) of any one of claims 1 to 10,
wherein the battery (219) is configured to store the power rectified by the power conversion circuit (217), and
wherein the signal detector (215) is configured to operate based on power provided from the battery (219).

12. The power control circuit (110) of any one of claims 1 to 11, wherein the power conversion circuit (217) is configured to:
rectify the power provided from the harvester (221),
based on a magnitude of the rectified power exceeding a reference value, provide remaining power of the rectified power to the battery (219) while providing a portion of the rectified power to the signal detector (215).

13. The power control circuit (110) of any one of claims 1 to 12, wherein the power conversion circuit (217) is configured to, based on the magnitude of the rectified power being less than or equal to the reference value, provide all of the rectified power to the signal detector (215).

14. The power control circuit (110) of any one of claims 1 to 13, wherein the power conversion circuit (217) is configured to, based on the magnitude of the rectified power being less than or equal to the reference value, transmit additional power provided from the battery (219) to the signal detector (215), while providing all of the rectified power to the signal detector (215).

15. The power control circuit (110) of any one of claims 1 to 14, wherein the battery (219) is configured to provide the additional power to the signal detector (215), while all of the rectified power is provided from the power conversion circuit (217) to the signal detector (215).
